# EUROPEAN PATENT SPECIFICATION

(11) **EP 3 663 462 B1**
(45) Date of publication and mention of the grant of the patent: **28.05.2025**
(21) Application number: 19207143.9
(22) Date of filing: 05.11.2019
(51) Int. Cl.: D21D 5/02

(54) **A SCREENING DEVICE AND A ROTOR**
SIEBVORRICHTUNG UND ROTOR
DISPOSITIF DE CRIBLAGE ET ROTOR

(30) Priority: 03.12.2018 FI 20186035
(43) Date of publication of application: 10.06.2020
(73) Proprietor: Valmet Technologies Oy, 02150 Espoo (FI)
(72) Inventor: HOLMA, Petri, 37630 Valkeakoski (FI); KAUPPILA, Jani, 37630 Valkeakoski (FI); NIEMINEN, Timo J., 36110 Ruutana (FI)
(74) Representative: Berggren Oy

(56) References cited:
- EP-A2- 1 632 601
- WO-A1-02/064884
- WO-A1-2014/084788
- US-A- 4 663 030
- US-A- 6 029 821

## Description

The invention relates generally to producing fiber webs. Particularly the invention relates to a screening device for screening pulp suspensions according to the preamble of claim 1 and to a rotor of a screening device for screening pulp suspensions according to the preamble of claim 3.

As known from the prior art in fiber web machines, especially in paper and board machines, the fiber web is produced and treated in an assembly formed by a number of apparatuses arranged consecutively in a process line. A typical production and treatment line comprises a forming section comprising a head box and a forming unit and a press section as well as a subsequent drying section and a reel-up. The production and treatment line can further comprise other devices and sections for finishing the fiber web, for example, a size press, a calender, a coating section. The production and treatment line also comprises typically at least one winder for forming customer rolls as well as a roll packaging apparatus.

Before the head box pulp suspensions comprising recycled or virgin fiber are treated to be fed into the head box to be used to produce the fiber webs. A treatment system of the pulp suspensions for example comprises a pulping section, a coarse screening section, a centrifugal cleaning section, a fractionation section, a deashing system, a fine screening system, a fiber thickening system and fiber refining systems.

Screening is used for removing stickies, dirt specks and other impurities from the pulp suspension and for maximizing accept pulp quality and for ensuring constant runnability of the fiber web production process and for minimizing fiber losses in the pulp suspension treatment before the forming section and for minimizing breakdown of impurities and for protecting following process stages in the fiber web production. Screening is used in connection with pulp suspension treatment for pulp suspension comprising recycled fiber and/or virgin fiber. In treatment of pulp suspensions comprising recycled fiber screening is used in OCC line screening processes, in DIP line screening processes and in stock preparation. In treatment of pulp suspensions comprising virgin fiber screening is used in chemical pulping, mechanical pulping and in stock preparation. Depending on type of the impurity composition of the pulp suspension varies but generally impurities to be removed by screening are metals, sand, plastics, rubber, waxes, glass, stickies, ink, bark, pitch, shives, knots, rust, chemicals, robe and/or fiber bundles.

In the screening different types of screening devices are used. Main types of screening devices can be divided to coarse screens, fine screens, machine screens.

The screening device, or the screen, comprises as main components a screening cylinder and a rotor located and rotating inside the screening cylinder. A commonly used screen type comprises the screening cylinder provided with a cylindrical screening surface equipped with apertures for screening pulp. The apertures in the screening surface may be e.g. circular or elongated holes, or mutually parallel slots provided in the surface of the screening cylinder. A screen equipped with a screening cylinder typically further includes a rotor arranged inside the cylindrical screening surface for rotating the pulp in the screen and foils or blades supported against the frame of the rotor such that when the rotor rotates, the blades produce on the screening surface a pressure pulse on account of which reject pulp and fibers collected onto the screening surface become released from the screening surface and return to the pulp suspension.

Two main types of rotors of screening devices are drum rotors for low consistencies of pulp suspensions, typically up to 3%, and foil arm rotors for high consistencies of pulp suspensions, typically up to 4,5%. In foil arm rotors sometimes, the fibers and impurities of the pulp suspension tend to accumulate around the foil arms, which problem is called spinning. In drum rotors consistency variations may cause overloading situations due to accumulation of the fibers and impurities on the screening surface, which may prevent the flow through the screening surface.

In screening devices, the rotor is used to cause the pulp suspension to flow and to create the pressure pulse so that the pulp suspension is flown to the accept side of the screening surface of the screening cylinder and to keep the screening surface clean.

In patent application publication WO2014084788 A1 is disclosed a screening apparatus for screening pulp suspensions, comprising a casing, in which casing a cylindrical screening member is arranged for dividing the pulp into accept and reject, an inlet for the pulp, an outlet for the accept, an outlet for the reject, a rotor comprising a rotor body and at least one pulsation member located on the inside of the screening member, so that a screening chamber is formed between the rotor and the screening member, in which the rotor is provided with a detachable pulsation member package comprising at least one attachment ring attached to the rotor body, at least one support ring attached to or supported by the rotor body and the at least one pulsation member attached to the at least one attachment ring and the at least one support ring. In this known apparatus space between the outer surface of the rotor and the inner surface of the cylindrical screening member is small and thus, consistency of the pulp suspension to be screened is limited to low values, typically at 2 % consistency of the pulp suspension.

An object of the invention is to create a screening device and a rotor of a screening device, in which the disadvantages and problems of prior art are eliminated or at least minimized.

In particular an object of the invention is to provide a new type of screening device, in which energy savings and operational security are achieved.

In order to achieve the above-mentioned objects and those that come apparent later the screening device according to the invention is mainly characterized by the features of the characterizing clause of claim 1. The rotor of a screening device according to the invention in turn is mainly characterized by the features of the characterizing clause of claim 3. Advantageous embodiments and features are disclosed in the dependent claims.

According to the invention the screening device for screening pulp suspensions comprises a screening cylinder and a rotor located and rotating inside the screening cylinder, in which screening device the screening cylinder is cylindrical and its surface comprises apertures for passing through accept of the pulp suspension during screening, in which screening device the rotor for rotating the pulp suspension in a screening space located between an inner surface of the screening cylinder and an outer surface of the rotor comprises a cylindrical rotor body and a hub, in which screening device in the screening space foils are located, wherein the rotor of the screening device comprises circular elements welded or otherwise fixedly attached to the cylindrical rotor body on its outer surface and foil arms formed as low protrusions on the circular elements, the foils are detachably attached to the foil arms and distance between the outer surface of the rotor body and the inner surface of the screening of the screening device is 45-85 mm, preferably 55-75 mm.

According to the invention between the foils and an attachment surface of the foil arms adjustable adjustment components are located, by which distance between the outer surface of the attachment surface of the foil arms and the inner surface of the screening cylinder of the screening device is adjustable.

According to an advantageous feature of the invention the screening device is for screening pulp suspensions with 0 - 5%, preferably 4 - 4,5% consistency.

According to the invention the rotor of a screening device for screening pulp suspensions comprises a cylindrical rotor body and a hub and foils, wherein the rotor further comprises circular elements welded or otherwise fixedly attached to the cylindrical rotor body on its outer surface and foil arms formed as low protrusions on the circular elements and the foils are detachably attached to the foil arms.

According to the invention between the foils and an attachment surface of the foil arms adjustable adjustment components are located, by which distance of the foils from the outer surface of the rotor body is adjustable.

According to an advantageous aspect of the invention the rotor of the screening device comprises a hollow cylindrical body, circular elements welded or otherwise fixedly attached to the cylindrical body on its outer surface, foil arms formed as low protrusions on the circular elements and detachably to the foil arms attached foils.

Advantageously, between the foils and an attachment surface of the foil arms adjustable adjustment components are located, by which distance between the outer surface of the rotor body and the inner surface of the screening cylinder of the screening device is adjustable. Advantageously, the distance is 45-85 mm, preferably 55-75 mm.

According to an advantageous aspect of the invention the screening device comprises a cylindrical screening cylinder and a rotor provided with a hollow cylindrical body and the rotor further comprises detachable foils. The outer diameter of the hollow cylindrical body of the rotor is smaller than the inner diameter of the cylindrical screening cylinder.

In the screening device according to the invention and to its advantageous features weight of the foil arms and the rotor is minimized by the inventive structure of the rotor and thus also energy savings are achieved. Additionally, operational security is provided in consistency variation situations.

The detachable attachment of the foils to the foil arms provides the possibility of providing the screening cylinder with such foils that in each case provide for the most suitable screening effect and thus any operational problems can be avoided. Also, lower maintenance costs are achieved.

In the screening device according to the invention and its advantageous features the foil clearance being adjustable as well as the foils being detachably attached to the foil arms thus being changeable an increased capacity is achieved. This also provides the possibility of optimizing the screening effect.

As is clear from the above by the screening device according to the invention and by the rotor according to the invention many advantages are achieved and especially a robust, low-energy consuming rotor for a screening device, in particular for a pressure screen is achieved. Thus, high energy savings are achieved. Additionally, the screen and the rotor according to the invention provide the possibility of also screening of pulp suspensions of high consistency, over 4 % consistency of the pulp suspension.

In the following the invention is explained in detail with reference to the accompanying drawing to which the invention is not to be narrowly limited.

In figures 1A-1B is shown schematically an advantageous example of a screening device according to the invention.

In figures 2A-2B is shown schematically an advantageous example of a screening device according to the invention.

In figures 3A-3B is shown schematically an advantageous example of a screening device according to the invention.

In figures 4A-4C is shown schematically an advantageous example of a screening device according to the invention.

In figures 5A-5C is shown schematically an advantageous example of a screening device according to the invention.

In figures 6A-6C is shown schematically an advantageous example of a screening device according to the invention.

During the course of the following description like numbers and signs will be used to identify like elements according to the different views which illustrate the invention and its advantageous examples. In the figures some repetitive reference signs have been omitted for clarity reasons.

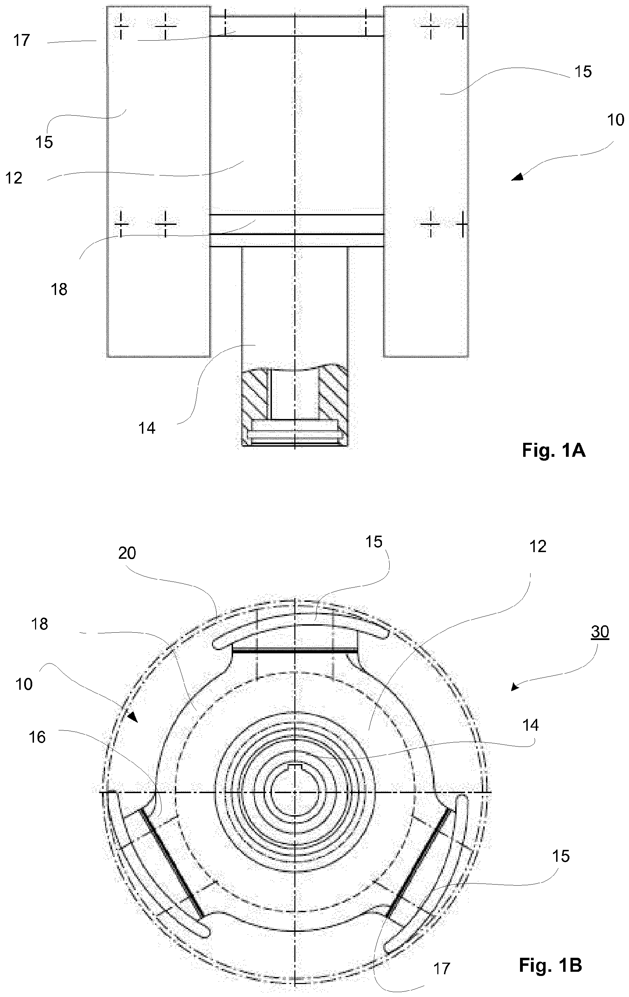

In figures 1A-1B an example of a screening device 30 according to the invention is shown, which comprises a screening cylinder 20 and a rotor 10 located and rotating inside the screening cylinder 20. The rotor 10 comprises a hub 14 to be connected to a motor or like providing power for the rotational movement of the rotor 10. The screening cylinder 20 is cylindrical and its surface comprises apertures, for example circular or elongated holes, or mutually parallel slots provided in the surface of the screening cylinder 20 for passing through accept of the pulp suspension during screening. The rotor 10 arranged inside the cylindrical screening cylinder 20 is for rotating the pulp suspension in the screening device 30 in the screening space located between the inner surface of the screening cylinder and the outer surface of a rotor body 12 of the rotor 10. In the screening space foils 15 are located. The foils 15 of the rotor 10, when the rotor 10 rotates, produce on the screening cylinder 20 a suction pressure pulse on account of which reject pulp and fibers collected onto the screening surface become released from the screening surface and return to the pulp suspension and accept pulp is flown through the apertures of the screening cylinder 20. The rotor 10 of the screening device 30 comprises the cylindrical rotor body 12, circular elements 18 welded or otherwise fixedly attached to the cylindrical rotor body 12 on its outer surface, foil arms 16 formed as low protrusions on the circular elements 18 as part of the circular elements 18. The protrusions are thus formed as one unity with the circular elements 18 during manufacturing of the circular elements 18. The foils 15 are detachably attached to the foil arms 16. The height of the low protrusions i.e. the foil arms 16 is defined by the distance between the outer surface of the rotor body 12 and the inner surface of the screening cylinder 20 of the screening device 30. Advantageously, between the foils 15 and an attachment surface of the foil arms 16 adjustable adjustment components 17 are located, by which distance between the outer surface of the attachment surface of the foil arms 16 and the inner surface of the screening cylinder 20 of the screening device 30 is adjustable. Advantageously, the distance is 45-85 mm, preferably 55 -75 mm thus providing a well-functioning screening space for screening high consistency pulp suspensions with 0-5%, preferably 4-4,5% consistency. The height of the foil arms 16 formed as low protrusions is advantageously 15-35% of the distance between the outer surface of the attachment surface of the foil arms 16 and the inner surface of the screening cylinder 20 of the screening device. The foils 15 extend in longitudinal direction substantially over the longitudinal length of the rotor body 12 and the screening cylinder 20. The detachable attachment of the foils 15 to the foil arms 16 provides replacing the foils 15 for the most suitable screening effect and thus any operational problems can be avoided. Also, lower maintenance costs are achieved as the foils 15 are easily replaceable, when needed. In this advantageous example there are three (3) foils 15 spaced apart in a 120 ° angle.

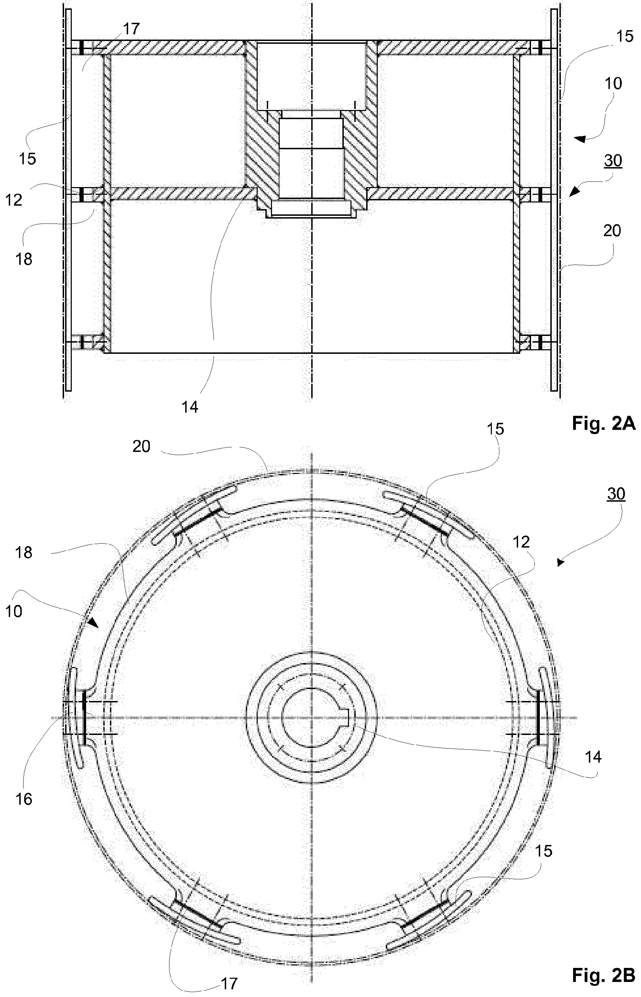

In the example of figures 2A-2B an example of a screening device 30 according to the invention is shown, in which comprises a screening cylinder 20 and a rotor 10 located and rotating inside the screening cylinder 20. The rotor 10 comprises a hub 14 to be connected to a motor or like providing power for the rotational movement of the rotor 10. The screening cylinder 20 is cylindrical and its surface comprises apertures, for example circular or elongated holes, or mutually parallel slots provided in the surface of the screening cylinder 20 for passing through accept of the pulp suspension during screening. The rotor 10 arranged inside the cylindrical screening cylinder 20 is for rotating the pulp suspension in the screening device 30 in the screening space located between the inner surface of the screening basked and the outer surface of the rotor body 12. In the screening space foils 15 are located. The foils 15 of the rotor 10, when the rotor 10 rotates, produce on the screening cylinder 20 a suction pressure pulse on account of which reject pulp and fibers collected onto the screening surface become released from the screening surface and return to the pulp suspension and accept pulp is flown through the apertures of the screening cylinder 20. The rotor 10 of the screening device 30 comprises the cylindrical rotor body 12, circular elements 18 welded or otherwise fixedly attached to the cylindrical body 12 on its outer surface, foil arms 16 formed as low protrusions on the circular elements 18 as part of the circular elements 18. The protrusions are thus formed as one unity with the circular elements 18 during manufacturing of the circular elements 18. The foils 15 are detachably attached to the foil arms 16. The height of the low protrusions i.e. the foil arms 16 is defined by the distance between the outer surface of the rotor body 12 and the inner surface of the screening cylinder 20 of the screening device 30. Advantageously, between the foils 15 and an attachment surface of the foil arms 16 adjustable adjustment components 17 are located, by which distance between the outer surface of the attachment surface of the foil arms 16 and the inner surface of the screening cylinder 20 of the screening device 30 is adjustable. In this advantageous example there are six (6) foils 15 spaced apart in a 60° angle. Advantageously, the distance is 45-85 mm, preferably 55-75 mm thus providing a well-functioning screening space for screening high consistency pulp suspensions with 0-5%, preferably 4-4,5% consistency. The height of the foil arms 16 formed as low protrusions is advantageously 15-35% of the distance between the outer surface of the attachment surface of the foil arms 16 and the inner surface of the screening cylinder 20 of the screening device. The foils 15 extend in longitudinal direction substantially over the longitudinal length of the rotor 10 and the screening cylinder 20. The detachable attachment of the foils 15 to the foil arms 16 provides replacing the foils 15 for the most suitable screening effect and thus any operational problems can be avoided. Also, lower maintenance costs are achieved as the foils 15 are easily replaceable, when needed.

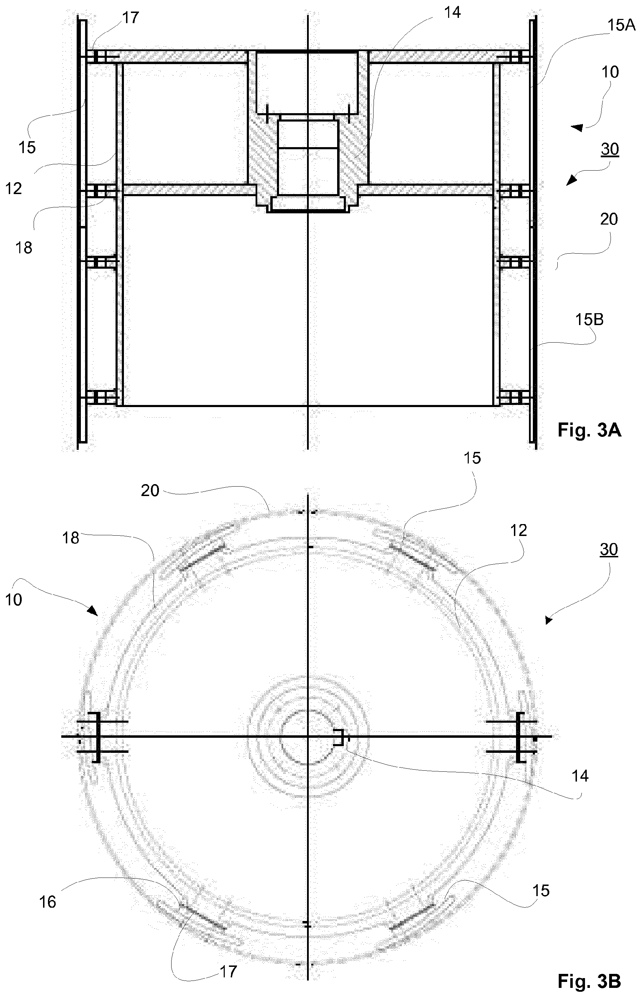

In the example of figures 3A-3B an example of a screening device 30 according to the invention is shown, in which comprises a screening cylinder 20 and a rotor 10 located and rotating inside the screening cylinder 20. The rotor 10 comprises a hub 14 to be connected to a motor or like providing power for the rotational movement of the rotor 10. The screening cylinder 20 is cylindrical and its surface comprises apertures, for example circular or elongated holes, or mutually parallel slots provided in the surface of the screening cylinder 20 for passing through accept of the pulp suspension during screening. The rotor 10 arranged inside the cylindrical screening cylinder 20 is for rotating the pulp suspension in the screening device 30 in the screening space located between the inner surface of the screening basked and the outer surface of the rotor body 12. In the screening space foils 15 are located. The foils 15 of the rotor 10, when the rotor 10 rotates, produce on the screening cylinder 20 a suction pressure pulse on account of which reject pulp and fibers collected onto the screening surface become released from the screening surface and return to the pulp suspension and accept pulp is flown through the apertures of the screening cylinder 20. The rotor 10 of the screening device 30 comprises the cylindrical rotor body 12, circular elements 18 welded or otherwise fixedly attached to the cylindrical body 12 on its outer surface, foil arms 16 formed as low protrusions on the circular elements 18 as part of the circular elements 18. The protrusions are thus formed as one unity with the circular elements 18 during manufacturing of the circular elements 18. The foils 15 are detachably attached to the foil arms 16. The height of the low protrusions i.e. the foil arms 16 is defined by the distance between the outer surface of the rotor body 12 and the inner surface of the screening cylinder 20 of the screening device 30. Advantageously, between the foils 15 and an attachment surface of the foil arms 16 adjustable adjustment components 17 are located, by which distance between the outer surface of the attachment surface of the foil arms 16 and the inner surface of the screening cylinder 20 of the screening device 30 is adjustable. In this advantageous example there are six (6) foils 15 spaced apart in a 60° angle. Advantageously, the distance is 45-85 mm, preferably 55-75 mm thus providing a well-functioning screening space for screening high consistency pulp suspensions with 0-5%, preferably 4-4,5% consistency. The height of the foil arms 16 formed as low protrusions is advantageously 15-35% of the distance between the outer surface of the attachment surface of the foil arms 16 and the inner surface of the screening cylinder 20 of the screening device. In this example the foils 15 are formed of two longitudinally extending parts 15A, 15B following each other in longitudinal direction substantially over the longitudinal length of the rotor 10 and the screening cylinder 20 in the same stage such that the two parts 15A, 15B of foils 15 are substantially in line with each other. The detachable attachment of the foils 15 to the foil arms 16 provides replacing the foils 15 for the most suitable screening effect and thus any operational problems can be avoided. Also, lower maintenance costs are achieved as the foils 15 are easily replaceable, when needed.

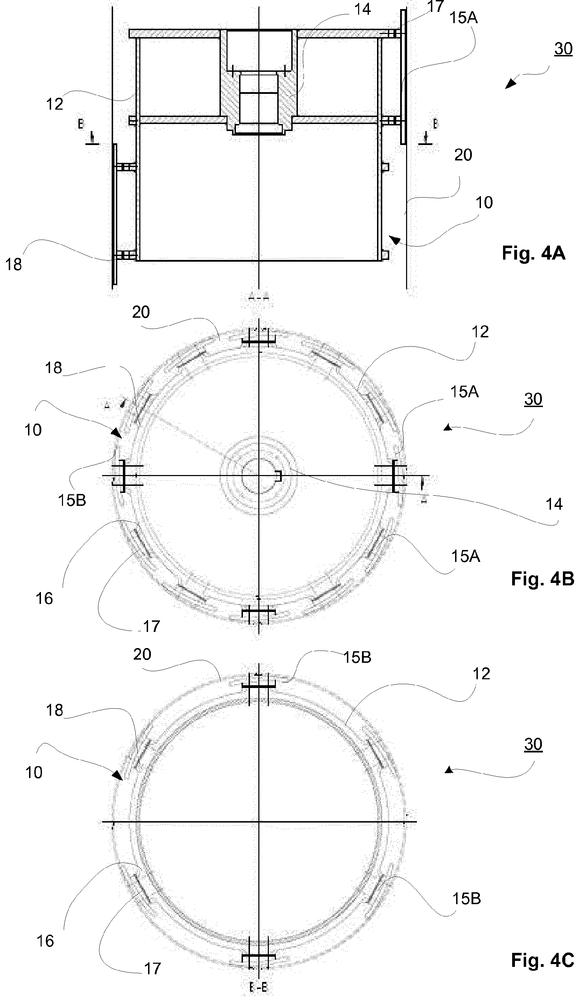

In the example of figures 4A-4C an example of a screening device 30 according to the invention is shown, in which comprises a screening cylinder 20 and a rotor 10 located and rotating inside the screening cylinder 20. The rotor 10 comprises a hub 14 to be connected to a motor or like providing power for the rotational movement of the rotor 10. The screening cylinder 20 is cylindrical and its surface comprises apertures, for example circular or elongated holes, or mutually parallel slots provided in the surface of the screening cylinder 20 for passing through accept of the pulp suspension during screening. The rotor 10 arranged inside the cylindrical screening cylinder 20 is for rotating the pulp suspension in the screening device 30 in the screening space located between the inner surface of the screening basked and the outer surface of the rotor body 12. In the screening space foils 15 are located. The foils 15 of the rotor 10, when the rotor 10 rotates, produce on the screening cylinder 20 a suction pressure pulse on account of which reject pulp and fibers collected onto the screening surface become released from the screening surface and return to the pulp suspension and accept pulp is flown through the apertures of the screening cylinder 20. The rotor 10 of the screening device 30 comprises the cylindrical rotor body 12, circular elements 18 welded or otherwise fixedly attached to the cylindrical body 12 on its outer surface, foil arms 16 formed as low protrusions on the circular elements 18 as part of the circular elements 18. The protrusions are thus formed as one unity with the circular elements 18 during manufacturing of the circular elements 18. The foils 15 are detachably attached to the foil arms 16. The height of the low protrusions i.e. the foil arms 16 is defined by the distance between the outer surface of the rotor body 12 and the inner surface of the screening cylinder 20 of the screening device 30. Advantageously, between the foils 15 and an attachment surface of the foil arms 16 adjustable adjustment components 17 are located, by which distance between the outer surface of the attachment surface of the foil arms 16 and the inner surface of the screening cylinder 20 of the screening device 30 is adjustable. Advantageously, the distance is 45-85 mm, preferably 55-75 mm thus providing a well-functioning screening space for screening high consistency pulp suspensions with 0-5%, preferably 4-4,5% consistency. The height of the foil arms 16 formed as low protrusions is advantageously 15-35% of the distance between the outer surface of the attachment surface of the foil arms 16 and the inner surface of the screening cylinder 20 of the screening device. In this example the foils 15 are formed of two longitudinally extending parts 15A, 15B in longitudinal direction. The foils 15 of the upper part of the rotor 10 i.e. the parts 15A of the foils 15 and the foils 15 of the lower part of the rotor 10 i.e. the parts 15B of the foils 15 are in the different stage in the upper part and in the lower part. In the upper part there is six (6) foils 15 i.e. the parts 15A of the foils 15 spaced apart in a 60° angle and in the lower part there is six (6) foils i.e. the parts 15B of the foils 15 spaced apart in a 60° angle. The detachable attachment of the foils 15 to the foil arms 16 provides replacing the foils 15 for the most suitable screening effect and thus any operational problems can be avoided. Also, lower maintenance costs are achieved as the foils 15 are easily replaceable, when needed.

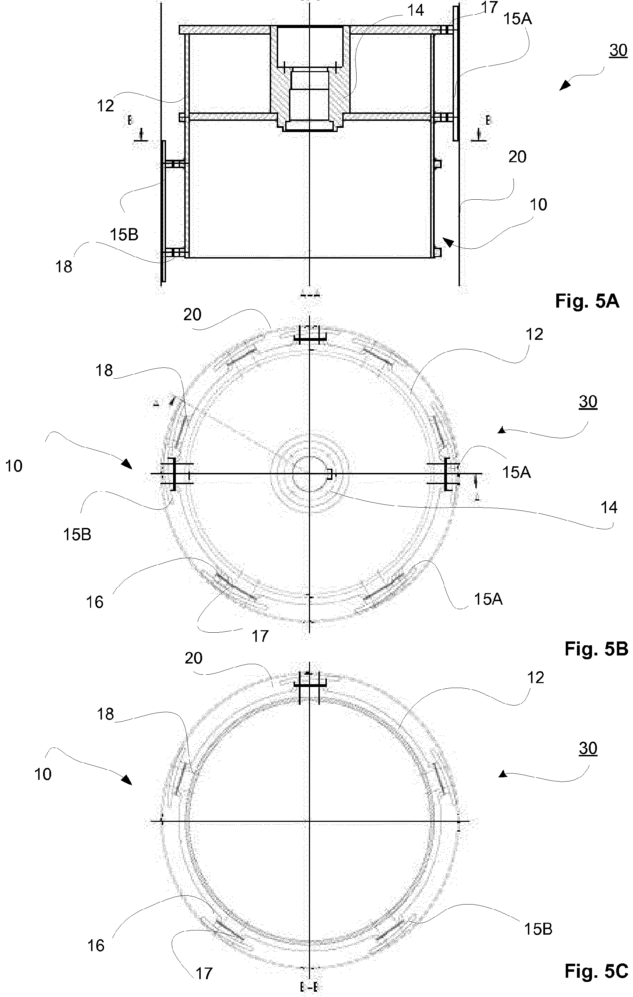

In the example of figures 5A-5C an example of a screening device 30 according to the invention is shown, in which comprises a screening cylinder 20 and a rotor 10 located and rotating inside the screening cylinder 20. The rotor 10 comprises a hub 14 to be connected to a motor or like providing power for the rotational movement of the rotor 10. The screening cylinder 20 is cylindrical and its surface comprises apertures, for example circular or elongated holes, or mutually parallel slots provided in the surface of the screening cylinder 20 for passing through accept of the pulp suspension during screening. The rotor 10 arranged inside the cylindrical screening cylinder 20 is for rotating the pulp suspension in the screening device 30 in the screening space located between the inner surface of the screening basked and the outer surface of the rotor body 12. In the screening space foils 15 are located. The foils 15 of the rotor 10, when the rotor 10 rotates, produce on the screening cylinder 20 a suction pressure pulse on account of which reject pulp and fibers collected onto the screening surface become released from the screening surface and return to the pulp suspension and accept pulp is flown through the apertures of the screening cylinder 20. The rotor 10 of the screening device 30 comprises the cylindrical rotor body 12, circular elements 18 welded or otherwise fixedly attached to the cylindrical body 12 on its outer surface, foil arms 16 formed as low protrusions on the circular elements 18 as part of the circular elements 18. The protrusions are thus formed as one unity with the circular elements 18 during manufacturing of the circular elements 18. The foils 15 are detachably attached to the foil arms 16. The height of the low protrusions i.e. the foil arms 16 is defined by the distance between the outer surface of the rotor body 12 and the inner surface of the screening cylinder 20 of the screening device 30. Advantageously, between the foils 15 and an attachment surface of the foil arms 16 adjustable adjustment components 17 are located, by which distance between the outer surface of the attachment surface of the foil arms 16 and the inner surface of the screening cylinder 20 of the screening device 30 is adjustable. Advantageously, the distance is 45-85 mm, preferably 55-75 mm thus providing a well-functioning screening space for screening high consistency pulp suspensions with 0-5%, preferably 4-4,5% consistency The height of the foil arms 16 formed as low protrusions is advantageously 15-35% of the distance between the outer surface of the attachment surface of the foil arms 16 and the inner surface of the screening cylinder 20 of the screening device. In this example the foils 15 are formed of two longitudinally extending parts 15A, 15B in longitudinal direction. The foils 15 of the upper part of the rotor 10 i.e. the parts 15A of the foils 15 and the foils 15 of the lower part of the rotor 10 i.e. the parts 15B of the foils 15 are in different frequency i.e. there is different number of parts 15A, 15B of the foils 15 in the upper part and in the lower part. In the upper part there is six (6) foils 15 i.e. the parts 15A of the foils 15 spaced apart in a 60° angle and in the lower part there is five (5) foils 15 i.e. the parts 15B of the foils 15 spaced apart in a 72° angle. The detachable attachment of the foils 15 to the foil arms 16 provides replacing the foils 15 for the most suitable screening effect and thus any operational problems can be avoided. Also, lower maintenance costs are achieved as the foils 15 are easily replaceable, when needed.

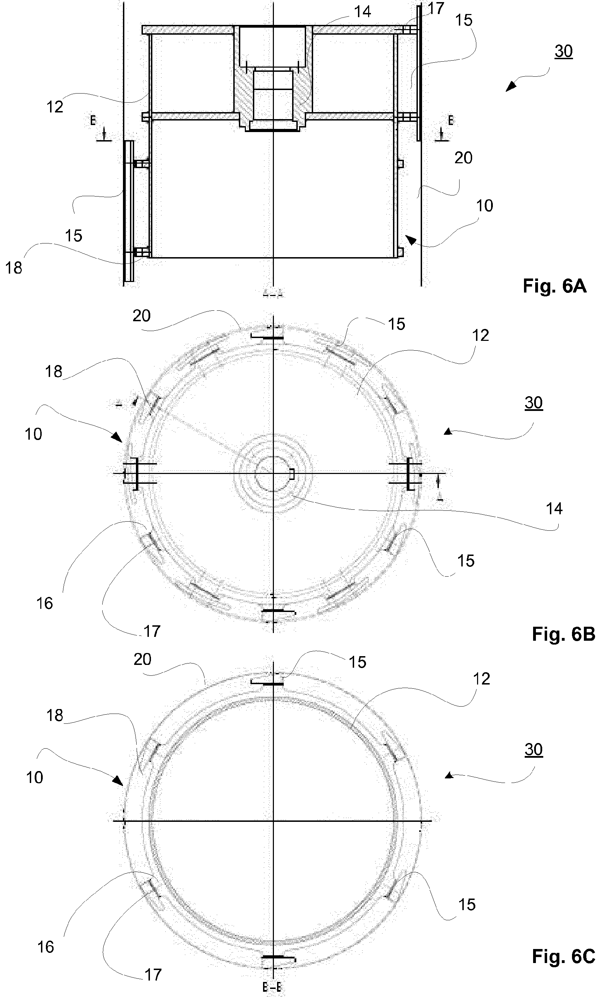

In the example of figures 6A-6C an example of a screening device 30 according to the invention is shown, in which comprises a screening cylinder 20 and a rotor 10 located and rotating inside the screening cylinder 20. The rotor 10 comprises a hub 14 to be connected to a motor or like providing power for the rotational movement of the rotor 10. The screening cylinder 20 is cylindrical and its surface comprises apertures, for example circular or elongated holes, or mutually parallel slots provided in the surface of the screening cylinder 20 for passing through accept of the pulp suspension during screening. The rotor 10 arranged inside the cylindrical screening cylinder 20 is for rotating the pulp suspension in the screening device 30 in the screening space located between the inner surface of the screening basked and the outer surface of the rotor body 12. In the screening space foils 15 are located. The foils 15 of the rotor 10, when the rotor 10 rotates, produce on the screening cylinder 20 a suction pressure pulse on account of which reject pulp and fibers collected onto the screening surface become released from the screening surface and return to the pulp suspension and accept pulp is flown through the apertures of the screening cylinder 20. The rotor 10 of the screening device 30 comprises the cylindrical rotor body 12, circular elements 18 welded or otherwise fixedly attached to the cylindrical body 12 on its outer surface, foil arms 16 formed as low protrusions on the circular elements 18 as part of the circular elements 18. The protrusions are thus formed as one unity with the circular elements 18 during manufacturing of the circular elements 18. The foils 15 are detachably attached to the foil arms 16. The height of the low protrusions i.e. the foil arms 16 is defined by the distance between the outer surface of the rotor body 12 and the inner surface of the screening cylinder 20 of the screening device 30. Advantageously, between the foils 15 and an attachment surface of the foil arms 16 adjustable adjustment components 17 are located, by which distance between the outer surface of the attachment surface of the foil arms 16 and the inner surface of the screening cylinder 20 of the screening device 30 is adjustable. Advantageously, the distance is 45-85 mm, preferably 55-75 mm thus providing a well-functioning screening space for screening high consistency pulp suspensions with 0-5%, preferably 4-4,5% consistency. The height of the foil arms 16 formed as low protrusions is advantageously 15-35% of the distance between the outer surface of the attachment surface of the foil arms 16 and the inner surface of the screening cylinder 20 of the screening device. In this example the foils 15 are formed of two longitudinally extending parts 15A, 15B in longitudinal direction. The foils 15 of the upper part of the rotor 10 i.e. the parts 15A of the foils 15 and the foils 15 of the lower part of the rotor 10 i.e. the parts 15B of the foils 15 are of different type of parts 15A, 15B of the foils 15 in the upper part and in the lower part. In the upper part there is six (6) foils 15 i.e. the parts 15A of the foils 15 spaced apart in a 60° angle and in the lower part there is six (6) foils 15 i.e. the parts 15B of the foils 15 spaced apart in a 60° angle. The detachable attachment of the foils 15 to the foil arms 16 provides replacing the foils 15 for the most suitable screening effect and thus any operational problems can be avoided. Also, lower maintenance costs are achieved as the foils 15 are easily replaceable, when needed.

In the screening device 30 around the rotor body 12 at least two foils 15 are located spaced apart, advantageously at equal angles. Typically, there are three or more foils 15 in the rotor 10. The foils 15 can extend in longitudinal direction of the rotor in the axial direction of the rotor hub 14 or in an angled direction in respect of the axial direction of the rotor hub 14.

Above only some advantageous examples of the inventions have been described to which examples the invention is not to be narrowly limited and many modifications and alterations are possible within the invention.

## Claims

1. Screening device for screening pulp suspensions, which screening device (30) comprises a screening cylinder (20) and a rotor (10) located and rotating inside the screening cylinder (20), in which screening device (30) the screening cylinder (20) is cylindrical and its surface comprises apertures for passing through accept of the pulp suspension during screening, in which screening device (30) the rotor (10) for rotating the pulp suspension in a screening space located between an inner surface of the screening cylinder (20) and an outer surface of the rotor (10) comprises a cylindrical rotor body (12) and a hub (14), in which screening device in the screening space foils (15) are located, in which the rotor (10) of the screening device (20) comprises circular elements (18) welded or otherwise fixedly attached to the cylindrical rotor body (12) on its outer surface and foil arms (16), which foils (15) are detachably attached to the foil arms (16), **characterized in that** between the foils (15) and an attachment surface of the foil arms (16) adjustable adjustment components (17) are located, by which distance between outer surface of the attachment surface of the foil arms (16) and the inner surface of the screening cylinder (20) of the screening device (30) is adjustable and the distance between the outer surface of the attachment surface of the foil arms (16) and the inner surface of the screening cylinder (20) of the screening device (30) is 45-85 mm, preferably 55 -75 mm and **that** the foil arms are formed on the circular elements (18) as low protrusions such, that height of the foil arms (16) is 15-35% of the distance between the outer surface of the attachment surface of the foil arms (16) and the inner surface of the screening cylinder (20) of the screening device (30).

2. Screening device according to claim 1, **characterized in that** the screening device (30) is for screening pulp suspensions with, 0-5%, preferably 4-4,5% consistency.

## Patentansprüche

1. Siebvorrichtung zum Sieben von Faserstoffsuspensionen, wobei die Siebvorrichtung (30) einen Siebzylinder (20) und einen im Siebzylinder (20) angeordneten und rotierenden Rotor (10) umfasst, wobei in der Siebvorrichtung (30) der Siebzylinder (20) zylindrisch ist und seine Oberfläche Öffnungen zum Durchlassen des Gutstoffs der Zellstoffsuspension während des Siebens aufweist, wobei in der Siebvorrichtung (30) der Rotor (10) zum Drehen der Faserstoffsuspension in einem Siebraum zwischen einer Innenfläche des Siebzylinders (20) und einer Außenfläche des Rotors (10) einen zylindrischen Rotorkörper (12) und eine Nabe (14) umfasst, wobei in der Siebvorrichtung sich im Abschirmraum Folien (15) befinden, wobei der Rotor (10) der Siebvorrichtung (20) kreisförmige Elemente (18), die an der Außenfläche des zylindrischen Rotorkörpers (12) angeschweißt oder anderweitig fest angebracht sind, sowie Folienarme (16) umfasst, wobei die Folien (15) lösbar an den Folienarmen (16) befestigt sind, **dadurch gekennzeichnet, dass** sich zwischen den Folien (15) und einer Befestigungsfläche der Folienarme (16) verstellbare Justierelemente (17) befinden, wobei der Abstand zwischen der Außenfläche der Befestigungsfläche der Folienarme (16) und der Innenfläche des Siebzylinders (20) der Siebvorrichtung (30) einstellbar ist und der Abstand zwischen der Außenfläche der Befestigungsfläche der Folienarme (16) und der Innenfläche des Siebzylinders (20) der Siebvorrichtung (30) 45-85 mm, vorzugsweise 55-75 mm beträgt, und **dass** die Folienarme an den kreisförmigen Elementen (18) als niedrige Vorsprünge ausgebildet sind, sodass die Höhe der Folienarme (16) 15-35 % des Abstands zwischen der Außenfläche der Befestigungsfläche der Folienarme (16) und der Innenfläche des Siebzylinders (20) der Siebvorrichtung (30) beträgt.

2. Siebvorrichtung nach Anspruch 1, **dadurch gekennzeichnet, dass** die Siebvorrichtung (30) zum Sieben von Faserstoffsuspensionen mit 0-5 %, vorzugsweise 4-4,5 % Konsistenz geeignet ist.

## Revendications

1. Dispositif de criblage pour suspensions de pâte, lequel dispositif de criblage (30) comprend un cylindre de criblage (20) et un rotor (10) situé et tournant à l'intérieur du cylindre de criblage (20), dans lequel le dispositif de criblage (30), le cylindre de criblage (20) est cylindrique et sa surface comprend des ouvertures pour le passage de la suspension de pâte pendant le criblage, dans lequel dispositif de criblage (30) le rotor (10), pour la rotation de la suspension de pâte dans un espace de criblage situé entre la surface intérieure du cylindre de criblage (20) et la surface extérieure du rotor (10), comprend un corps de rotor cylindrique (12) et un moyeu (14), dans lequel le dispositif de criblage dans l'espace de criblage, des feuilles (15) sont disposées, dans lequel le rotor (10) du dispositif de criblage (20) comprend des éléments circulaires (18) soudés ou fixés autrement de manière fixe au corps de rotor cylindrique (12) sur sa surface extérieure, ainsi que des bras de feuille (16), lesquelles feuilles (15) sont fixées de manière amovible aux bras de feuille (16), **caractérisé en ce qu'**entre les feuilles (15) et la surface de fixation des bras de feuille (16), sont disposés des composants de réglage réglables (17), par laquelle la distance entre la surface extérieure de la surface de fixation des bras de feuille (16) et la surface intérieure du cylindre de criblage (20) du dispositif de criblage (30) est réglable et la distance entre la surface extérieure de la surface de fixation des bras de feuille (16) et la surface intérieure du cylindre de criblage (20) du dispositif de criblage (30) est de 45 à 85 mm, de préférence de 55 à 75 mm et **que** les bras de feuille sont formés sur les éléments circulaires (18) comme de faibles saillies de telle sorte que la hauteur des bras de feuille (16) est de 15 à 35 % de la distance entre la surface extérieure de la surface de fixation des bras de feuille (16) et la surface intérieure du cylindre de criblage (20) du dispositif de criblage (30).

2. Dispositif de criblage selon la revendication 1, **caractérisé en ce que** le dispositif de criblage (30) est destiné au criblage de suspensions de pâte ayant une consistance de 0 à 5 %, de préférence de 4 à 4,5 %.
